Europäisches Patentamt

European Patent Office

Office européen des brevets

(11) Veröffentlichungsnummer: **0 058 929**
**A2**

## EUROPÄISCHE PATENTANMELDUNG

(21) Anmeldenummer: 82101166.5

(22) Anmeldetag: 17.02.82

(51) Int. Cl.³: **C 08 L 69/00, C 08 L 25/00,
C 08 J 3/20**

(30) Priorität: 24.02.81 DE 3106758

(43) Veröffentlichungstag der Anmeldung: 01.09.82
Patentblatt 82/35

(84) Benannte Vertragsstaaten: **BE DE GB NL**

(71) Anmelder: **BASF Aktiengesellschaft,
Carl-Bosch-Strasse 38, D-6700 Ludwigshafen (DE)**

(72) Erfinder: **Brandstetter, Franz, Dr., Ritterbuechel 45,
D-6730 Neustadt (DE)**
Erfinder: **Haaf, Franz, Dr., Leistadter Strasse 9,
D-6702 Bad Duerkheim (DE)**

(54) **Verfahren zur Herstellung einer Mischung aus Polycarbonaten und Styrol enthaltender Polymerisate, Verwendung der Mischung und Formteile aus dieser.**

(57) Die Erfindung betrifft ein Verfahren zur Herstellung einer Mischung von einem Polycarbonat A und einem Styrol enthaltenden Polymerisat B, wobei man das in Lösung vorliegende Polycarbonat zunächst mit einem Fällungsmittel in Berührung bringt und danach das Lösungsmittel und das Fällungsmittel von dem ausgefallenen Feststoff bis auf einen Anteil von mehr als 1 und weniger als 50 Gew.-% an Fällungs- und/oder Lösungsmittel, bezogen auf Polycarbonat, entfernt und das erhaltene, eine Restfeuchte aufweisende Produkt mit dem Styrol enthaltenden Polymerisat bei Temperaturen oberhalb des Erweichungsbereiches der Komponenten unter Entfernung flüchtiger Bestandteile in üblicher Weise, ggf. unter Mitverwendung von Zusatzstoffen, C, mischt.
Die beanspruchten Mischungen sind geeignet zur Herstellung von Formteilen.

0053929

Verfahren zur Herstellung einer Mischung aus Polycarbonaten und Styrol enthaltender Polymerisate, Verwendung der Mischung und Formteile aus dieser

Die Erfindung betrifft ein Verfahren zur Herstellung von Mischungen aus Styrol enthaltenden Polymerisaten und Polycarbonaten, bei dem das Polycarbonat zunächst mit einem Fällungsmittel in Berührung gebracht wird und danach das Lösungsmittel und das Fällungsmittel von dem ausgefallenen Feststoff weitgehend entfernt wird und das erhaltende Produkt mit Styrol enthaltenden Polymerisaten bei Temperaturen oberhalb des Erweichungsbereiches der zu mischenden Komponenten vermischt wird.

Zum Stand der Technik nennen wir:

(1) DE-PS 1 170 141
(2) DE-OS 23 29 548
(3) US-PS 2 999 835
(4) JA. 46/37424
(5) DE-AS 24 27 960

Mischungen von Styrol enthaltenden Polymerisaten mit Polycarbonat sind beispielsweise in (1) und (2) beschrieben. Ferner ist es bekannt, Polycarbonate nach der Herstellung mit einem diese nicht lösenden Medium aus der Reaktionslösung auszufällen [vgl. (3)]. Geeignet ist auch das Einsprühen der Reaktionslösung in ein großes Volumen heißen Wassers. Dabei werden die wasserlöslichen Verunreinigungen zugleich entfernt [vgl. (4)].

Nach dem Abtrennen des Polymerisates muß dann immer noch ein aufwendiger und kostspieliger Trocknungsprozeß zur Isolierung des Polycarbonats in Kauf genommen werden, bevor man durch Aufschmelzen des getrockneten Polycarbonats

Vo/P

BASF Aktiengesellschaft — 2 — O.Z. 0050/034957

0058929

und des Styrol enthaltenden Polymerisates die gewünschten Mischungen herstellen kann.

Der Erfindung lag also die Aufgabe zugrunde, ein technisch einfaches Verfahren zum Einarbeiten von Polycarbonat in Styrol enthaltende Polymerisate zu finden, bei dem der aufwendige Trocknungsschritt des Polycarbonates umgangen werden kann.

Diese Aufgabe wird gelöst, durch die Maßnahmen von Patentanspruch 1.

Das erfindungsgemäße Verfahren findet also seine Anwendung bei der Herstellung von Mischungen auf Basis von Styrol enthaltenden Polymerisaten und von Polycarbonaten.

Komponente B:

Bei den Styrol enthaltenden Polymerisaten B handelt es sich um Polymerisate von Styrol und/oder $\alpha$-Methylstyrol und deren Copolymerisate mit Acrylnitril, mit Maleinsäureanhydrid und mit Estern der Methacrylsäure. Der Gehalt an Comonomeren wie Acrylnitril, Maleinsäureanhydrid und Estern der Methacrylsäure soll 5 bis 50 Gew.-%, vorzugsweise 10 bis 35 Gew.-%, bezogen auf das Styrol und bzw. $\alpha$-Methylstyrol enthaltende Copolymerisat, betragen.

Die Polymerisate bzw. Copolymerisate B, können nach herkömmlichen Verfahren erhalten werden. So kann die Polymerisation des Styrols und/oder des $\alpha$-Methylstyrols bzw. deren Copolymerisation mit den vorstehend erwähnten Comonomeren in Masse, Lösung oder wäßriger Emulsion erfolgen.

Als Styrol enthaltende Polymerisate B bzw. Copolymerisate können aber auch schlagzäh modifizierte Polymerisate, wie schlagzäh modifiziertes Polystyrol, ABS, AES, MBS, ASA und schlagzäh modifizierte Styrol-Maleinsäure-Copolymerisate verwendet werden. Die zur Herstellung dieser schlagfest ausgerüsteten Massen verwendeten Kautschuke müssen elastomere Eigenschaften haben, damit sie eine Verbesserung der Schlagzähigkeit des Thermoplasten bewirken. Unter Kautschuke sind demzufolge hochmolekulare Verbindungen zu verstehen, die eine Glastemperatur von weniger als $0^o$C, vorzugsweise weniger als $-30^o$C, aufweisen (K.H. Illers, Kolloid-Zeitschrift 176, Seite 110, 1961). Dabei kommen beispielsweise infrage: Naturkautschuk, Synthesekautschuke, wie Polybutadien, Polyisoprene und Copolymerisate von Butadien mit Styrol oder Acrylnitril, ferner Elastomere auf Basis von Alkylestern der Acrylsäure, wobei der Alkylrest 1 bis 8 C-Atome aufweisen kann, Copolymerisate von Alkylestern der Acrylsäure mit Butadien, Styrol, Acrylnitril und Vinyläthern, sowie Copolymerisate aus Ethylen-Propylen und einem nichtkonjugierten Dien (EPDM-Kautschuke).

Bevorzugt werden sogenannte Pfropfcopolymerisate zur Schlagzähmodifizierung eingesetzt. Dadurch wird bekanntlich eine Verträglichkeit des Kautschuks mit der Hartkomponente angestrebt. Die Herstellung der Styrol enthaltenden, schlagzäh modifizierten Polymerisate kann nach bekannten Verfahren in Emulsion, Masse, Lösung und Suspension, oder nach kombinierten Verfahren, wie in Masse-Suspension, erfolgen. Solche Verfahren sind beispielsweise in den DE-AS' 1 238 207, 1 260 135, 1 911 882, 2 427 960 und in den US-PS' 2 694 692, 2 862 904 und 3 903 199 beschrieben.

Komponente A:

Unter Polycarbonaten A, die als Komponente der Mischung für das erfindungsgemäße Verfahren fungieren, sollen aromatische Polycarbonate auf der Basis von Homopolycarbo-

0058929

naten und Copolycarbonaten verstanden werden. Als Bisphenole kommen dabei beispielsweise infrage: Dihydroxydiphenyle, Bis-(hydroxyphenyl)alkane, Bis-(hydroxyphenyl)ether. Es können aber auch alle anderen, für die Herstellung von Polycarbonaten geeigneten Bisphenole eingesetzt werden, wie sie u.a. in der Monographie H. Schnell, Chemistry and Physiks of Polycarbonates, Intersience Publishers, New York, 1964, in der US-PS 2 999 835 und in der DE-OS 2 248 817 beschrieben sind. Besonders bevorzugt sind Polycarbonate auf Basis von 2,2-Bis-(4-hydroxyphenyl)propan für die Einmischung in überwiegend Styrol enthaltende Copolymerisate B. Für die Mischungen mit reinen Styrolpolymerisaten, die auch schlagzäh modifiziert sein können, eignet sich besonders ein Polycarbonat auf Basis von 2,2-Bis-(4-hydroxy-3,5--dimethylphenyl)propan. Die Synthese der Polycarbonate wird beispielsweise in der US-PS 2 999 835, der GB-PS 772 627 und in Angewandte Makromolekulare Chemie 55, (1976), Seiten 175 bis 189, beschrieben.

Die Gewinnung der Polycarbonate aus der Reaktionslösung kann durch Fällen des Polymerisates mit einem Polycarbonat nicht lösenden Medium, wie Methanol und Isopropanol erfolgen. Zur Entfernung der bei der Reaktion entstehenden wasserlöslichen Nebenprodukte empfiehlt es sich jedoch das gefällte Produkt gut mit Wasser zu waschen. Eine andere Möglichkeit, das Polycarbonat aus der Reaktionslösung zu gewinnen, besteht darin, daß man die Reaktionslösung direkt in heißes Wasser einsprüht. Dabei verdampft ein Großteil der verwendeten organischen Lösungsmittel und zugleich wird das Polycarbonat von wasserlöslichen Verunreingungen befreit. Ein Teil des Wassers und der Rest des organischen Lösungsmittels bzw. Fällungsmittels im allgemeinen 10-90 Gew.-%, vorzugsweise 30-70 Gew.-%, bezogen auf den Anteil an flüssiger Phase im gefällten oder verdüsten Produkt, wird nun mechanisch abgetrennt. Diese Abtrennung kann beispielsweise durch Filtrieren, Abpressen oder Zentrifugieren erfolgen. Das zurückbleibende Polycarbonat soll nach dieser Behandlung mehr als 1 und bis zu höchstens 50 Gew.-%, vorzugsweise 15-40 Gew.-% Restfeuchte, bezogen auf das Festprodukt, enthalten.

Unter Lösungsmitteln im Sinne der vorliegenden Erfindung sollen organische Lösungsmittel verstanden werden, die bei der Herstellung der Polycarbonate oder ggf. der Styrol enthaltenden Polymerisate verwendet werden. Unter Fällungsmitteln im Sinne der Erfindung sollen die Polycarbonate nicht lösende organische Lösungsmittel, z.B. Alkohole, wie Methanol, Isopropanol etc. und Wasser verstanden werden. Als Restfeuchte soll die Summe des Gehaltes an Lösungsmitteln und/oder Fällungsmitteln, bezogen auf den Feststoff, verstanden werden. Das Mischen des eine Restfeuchte aufweisenden Polycarbonates mit den Styrol enthaltenden Polymerisaten kann auf üblichen Mischanlagen erfolgen. Zweckmäßigerweise wird es auf Extrudern oder Knetern vorgenommen. Die Styrol enthaltenden Polymerisate werden im allgemeinen als Schmelze in die Mischvorrichtung eingebracht.

Bei Verwendung eines Extruders als Mischvorrichtung wird vorzugsweise zunächst das eine Restfeuchte aufweisende Polycarbonat eindosiert. Dies kann ohne Erhitzen durch Anwendung von Druck geschehen, und erst dann wird das Styrol enthaltende Polymerisat in Form einer Schmelze in diesen Extruder zugeführt. Nach der Vereinigung des Polycarbonates und des Styrol enthaltenden Polymerisates werden die beiden Komponenten durch Mischaggregate, beispielsweise durch intensiv mischende Knetelemente im Extruder homogen vermischt. Dabei muß die Temperatur oberhalb des Erweichungspunktes sowohl des Styrol enthaltenden Polymerisates als auch des Polycarbonates liegen. Die Mischtemperatur liegt im Bereich zwischen 180 und 320°C, vorzugsweise wird ein Bereich von 200 bis 280°C angewendet.

0058929

übliche Zusatzstoffe C), wie Pigmente, Farbstoffe, Füllstoffe, Gleitmittel, Antistatika, Antioxidantien, Flammschutzmittel und dergleichen, können entweder in trockener Form zugemischt werden oder zweckmäßigerweise zusammen mit dem eine Restfeuchte aufweisenden Polycarbonat ebenfalls in feuchter Form zugegeben werden. Dabei ist jedoch zu beachten, daß die gesamte Restfeuchte, herrührend aus dem Polycarbonat und dem Zusatzstoff, den vorstehend angegebenen oberen Grenzwert von 50 Gew.-% nicht überschreitet.

Die im Polycarbonat und gegebenenfalls auch im Styrol enthaltenden Polymerisat vorhandenen flüssigen Bestandteile, das sind im wesentlichen die Komponenten die die Restfeuchte ausmachen, außerdem besondere Lösungsmittel aus der Herstellung des Styrolpolymerisates, und flüchtige oder flüssige Nebenprodukte, müssen während oder nach dem Einmischvorgang aus der erhaltenen Schmelze entfernt werden. Dies erfolgt zweckmäßigerweise durch Verdampfen der flüssigen Bestandteile.

Dabei werden Entgasungsvorrichtungen, die am Extruder in Förderrichtung nach der Mischzone angebracht sind, verwendet. Es muß darauf geachtet werden, daß durch diese Öffnungen mit dem Dampf kein Feststoff mitgerissen wird. Dies kann beispielsweise durch den Einbau von Entgasungsstopfschnecken in die Extruderöffnungen geschehen, wodurch mitgerissenes Festprodukt in den Hauptextruder zurückbefördert wird. Die Entgasung kann mit Gegendruck, drucklos oder unter Vakuum erfolgen. Es ist zweckmäßig, mehrere Entgasungsstufen hintereinander vorzusehen, wobei in Förderrichtung des Hauptextruders der Gegendruck stufenweise abnehmen soll. Zusammen mit dem Wasser werden wasserdampfflüchtige Bestandteile entfernt. Dadurch wird eine zusätzliche Reinigung des Polycarbonates und der Styrol enthaltenden Polymerisate von störenden Verunreinigungen, wie

0058929

Restmonomeren, Oligomeren, Restlösungsmitteln und Emulgatoren ermöglicht. Durch das Verdampfen des Wassers wird infolge seiner hohen Verdampfungswärme der Schmelze Energie entzogen. Aus diesem Grund ist es möglich, durch Variation Polycarbonat ein für das Mischen der Einsatzstoffe optimales Temperaturprofil über die Länge der Mischvorrichtung einzustellen: je mehr Wasser die Feuchtgüter enthalten, desto mehr Energie muß für die Verdampfung aufgebracht werden, desto mehr Wärme wird also der Schmelze entzogen und desto niedriger liegt das Temperaturniveau der Schmelze. Es ist nicht notwendig, die Mischvorrichtung zu beheizen, da durch die Scherwirkung der Mischelemente dem Mischgut genügend Energie zugeführt werden kann, um es auf dem gewünschten Temperaturniveau zu halten. Anscheinend wird die Viskosität des Mischguts durch die Anwesenheit von Wasser so sehr herabgesetzt, daß für den Mischvorgang wesentlich weniger mechanische Energie erforderlich ist als bei wasserfreiem Arbeiten. Durch das verhältnismäßig niedrige Temperaturniveau einerseits und die geringen Scherkräfte andererseits werden die Styrol enthaltenden Polymerisate und das Polycarbonat wesentlich weniger stark thermisch und mechanisch beansprucht als dies beim herkömmlichen Mischen der trockenen Thermoplaste der Fall ist. Außerdem ist die Temperaturregulierung beim erfindungsgemäßen Verfahren viel einfacher.

Das erfindungsgemäße Verfahren ermöglicht also ein technisch einfach durchzuführendes Mischen von feuchtem Polycarbonat mit Styrol enthaltenden Polymerisaten. Dabei erfolgt eine relativ geringe thermische und mechanische Beanspruchung der zu vermischenden Stoffe, was sich bei den schlagzäh modifizierten Styrol enthaltenden Polymerisaten in einer verbesserten Zähigkeit ausdrückt. Dennoch wird dabei eine homogene Verteilung der Komponenten A und B erzielt. Außerdem werden störende niedermolekulare Anteile aus dem Ge- misch durch den Mischungsvorgang entfernt. Das erfindungsgemäße Verfahren hat den Vorteil, daß kein zusätzlicher Aufschmelzvorgang zur Herstellung von Mischungen aus Polycarbonaten und Styrol enthaltenden Polymerisaten notwenig ist.

Die Erfindung wird nachstehend anhand von Beispielen und Vergleichsversuchen erläutert. Alle darin angegebenen Teile und Prozente beziehen sich, sofern nichts anderes vermerkt ist, auf das Gewicht.

Für die Durchführung des erfindungsgemäßen Verfahrens und der Vergleichsversuche wurden die nachstehend näher erläuterten Ausgangsprodukte verwendet.

Als Styrol enthaltende Polymerisate wurden folgende Polymerisate verwendet, die nach den Angaben in (5) hergestellt worden sind.

ABS (I):  ABS mit einem Polybutadiengehalt von 25 Gew.-% und mit einem Hartkomponentenanteil von 55 Gew.-%, wobei das Verhältnis von Styrol/Acrylnitril bei 5/65 und die Viskositätszahl bei 55 [ml/g] lag. Die mittlere Teilchengröße ($d_{50}$-Wert) der Weichkomponete betrug ca. 0,35 $\mu$m.

ABS (II): ABS mit einem Polybutadiengehalt von 25 Gew.-% und mit einem Hartkomponentenanteil von 55 Gew.-%, wobei die Hartkomponente aus einer Mischung von 55 Gew.-% eines Copolymeren aus $\alpha$-Methylstyrol/ Acrylnitril mit einem Acrylnitrilanteil von 30 Gew.-%, bezogen auf Copolymerisat und mit einer Viskositätszahl von 50 [ml/g], und von 55 Gew.-% eines Copolymerisates aus

0058929

Styrol/Acrylnitril mit einem Acrylnitrilanteil von 35 Gew.-%, bezogen auf Copolymerisat und einer Viskositätszahl von 67 [ml/g]. Die mittlere Teilchengröße ($d_{50}$-Wert) der Weichkomponente lag bei ca. 0,35 /um.

ASA: ASA mit einem Kautschukgehalt von 25 Gew.-%, wobei der Kautschuk durch Emulsionspolymerisation von Butylacrylat in Gegenwart von 2 Gew.-% des Acrylsäureesters des Tricyclodecenylalkohols hergestellt wurde, mit einem Hartkomponentenanteil von 50 Gew.-%, wobei die Hartkomponente ein Copolymerisat darstellt, das 35 Gew.-% Acrylnitril enthält und eine Viskositätszahl von 70 besitzt. Die Herstellung erfolgte nach DE-PS 12 60 135.

HIPS: Ein schlagzäh modifiziertes Polystyrol, mit einer mittleren Teilchengröße der Weichkomponente von 2-3 /um, hergestellt in Lösung.

Das Polycarbonat auf 2,2-Bis-(4-hydroxyphenyl)propan-Basis wurde analog Beispiel 2 der US-PS 2 999 835, das Polycarbonat auf 2,2-Bis-(4-hydroxy-3,5-dimethyl-phenyl)propan-Basis wurde nach den Angaben Angewandte Makromolekulare Chemie 55, (1976), Seiten 175-189 hergestellt.

Die in den Beispielen und Vergleichsversuchen beschriebenen Parameter wurden wie folgt gemessen:

1. Der Erweichungspunkt nach Vicat wurde nach DIN 53 460/B bestimmt.

2. Zur Ermittlung der Kerbschlagzähigkeit nach DIN 53 453 und der Buchenergie nach DIN 53 443, Blatt 1 wurden bei 250°C die entsprechenden Prüfkörper auf einer

0058929

Spritzgußmaschine hergestellt. Die Prüfung erfolgte bei 23°C.

3. Die mittlere Teilchengröße (Gewichtsmittel) der dispersen Weichkomponenten-Phase wurde bestimmt durch Auszählen und Mitteln der zur gleichen Größenklasse (konst. Interwallbreite) gehörigen Teilchen aus elektronenmikroskopischen Dünnschichaufnahmen. Mit den Volumina der Teilchen (3. Potenz des scheinbaren Durchmessers) innerhalb der Intervalle wird die Verteilungssummenkurve bestimmt. Beim 50 %-Ordinatenwert kann auf der Abszisse der Äquivalentdurchmesser dann abgegriffen werden. Die angegebenen mittleren Durchmesser stellen dabei einen Mittelwert von mindestens 5000 Teilchen dar.

4. Die relative Viskosität, die an 0,5 g Polycarbonat in 100 ml Methylenchloridlösung bei 25°C gemessen wurde, lag bei den beiden verwendeten Polycarbonaten bei 1,3.

5. Die Viskositätszahl der Hartkomponente von ABS (I) und (II) und von ASA wurde analog DIN 53 726 bestimmt, wobei 0,5 g Material in 100 ml Dimethylformamid gelöst wurden.

Beispiele 1-11

Zur Durchführung der Beispiele wurden die in der Tabelle aufgeführten Polymerisate in den genannten Anteilen verwendet. Die Aufarbeitung des Polycarbonats erfolgte dabei nach dem Ausfällen und intensiven Waschen mit destilliertem Wasser nach weitgehender Entfernung des Fällungsmittels und/oder Lösungsmittels durch Absaugen auf einen Rest-

0058929

feuchtegehalt von ca. 35 %, auf einem Doppelschneckenextruder, wie in der DE-AS 20 37 784 beschrieben.

Dabei wurde das feuchte Polycarbonat bei Raumtemperatur gleichmäßig durch eine Öffnung am Beginn des Extruders zugegeben; durch eine sich anschließende Öffnung wurde eine entsprechende Menge an Schmelze des Styrol enthaltenden Polymerisates eindosiert, so daß sich die in der Tabelle angegegebenen Zusammensetzungen ergaben. Hinter dieser Öffnung befindet sich im Extruder die Homogenisierstrecke in Form von intensiv mischenden Knetelementen. Die Massetemperatur lag im Bereich von 230 bis 280°C. Durch drei sich anschließende Entgasungsvorrichtungen wurden die flüssigen Bestandteile entfernt.

Vergleichsversuche A-J

Die in der Tabelle angegebenen Gewichtsteile an Styrol enthaltendem Polymerisat und an Polycarbonat, das nach dem Aufarbeiten aus der Lösung durch Fällung, Waschen und Filtrieren bei 60°C 24 Stunden lang bei 1 Torr im Vakuum getrocknet worden war (Restfeuchte 500 ppm) wurden auf einem Zweiwellenextruder bei 280°C geschmolzen, homogenisiert, gemischt und granuliert.

Wie aus einem Vergleich der in der Tabelle enthaltenen Meßwerte hervorgeht, zeigen Mischungen, die nach dem erfindungsgemäßen Verfahren hergestellt worden sind einen höheren Erweichungspunkt sowie bessere Zähigkeiten als Mischungen vom Stand der Technik.

Tabelle

| Beispiele (erfindungsgemäß) | Styrol enthaltendes Polymerisat Typ | [Gew.Tle.] | Polycarbonat [Gew.Tle.] Bisphenol-Typ | [Gew.Tle.] | Erweichungspunkt nach Vicat [°C] | Kerbschlagzähigkeit bei 23°C [KJ/m²] | Bruchenergie bei 23°C [Nm] |
|---|---|---|---|---|---|---|---|
| 1 | ABS (I) | 90 | 2,2-Bis-(4-hydroxy-phenyl)propan | 10 | 100 | 6,1 | 12,0 |
| 2 | ABS (I) | 70 | " | 30 | 107 | 6,6 | 22,5 |
| 3 | ABS (I) | 50 | " | 50 | 118 | 24,8 | 36,6 |
| 4 | ABS (I) | 30 | " | 70 | 132 | 31,1 | 48,5 |
| 5 | ABS (I) | 10 | " | 90 | 142 | 49,7 | 68,0 |
| 6 | ABS (II) | 80 | " | 20 | 118 | 4,2 | 13,2 |
| 8 | HIPS | 10 | 2,2-Bis-(4-hydroxy-phenyl)propan | 90 | 194 | 6 | 11,6 |
| 9 | HIPS | 25 | 3,5-dimethylphenyl)propan | 75 | 192 | 10 | 13,1 |
| 10 | ASA | 70 | 2,2-Bis-(4-hydroxy-phenyl)propan | 30 | 106 | 5,3 | 20,08 |
| 11 | ASA | 30 | " | 70 | 133 | 23,2 | 43,7 |

Tabelle
(Forts.)

| Vergleichsversuche (nicht erfindungsgemäß) | Styrol enthaltendes Polymerisat Typ | [Gew.Tle.] | Polycarbonat [Gew.Tle] Bisphenol-Typ | | Erweichungspunkt nach Vicat [°C] | Kerbschlag zähigkeit bei 23°C [KJ/m²] | Bruchenergie bei 23°C [Nm] |
|---|---|---|---|---|---|---|---|
| A | ABS (I) | 90 | 2,2-Bis-(4-hydroxy- | 10 | 99 | 5,8 | 8,9 |
| B | ABS (I) | 70 | phenyl)propan | 30 | 105 | 6,0 | 16,2 |
| C | ABS (I) | 50 | " | 50 | 112 | 22,7 | 34,0 |
| D | ABS (I) | 30 | " | 70 | 130 | 30,0 | 40,5 |
| E | ABS (I) | 10 | " | 90 | 142 | 39,0 | 58,5 |
| F | ABS (II) | 80 | " | 20 | 115 | 1,3 | 6,2 |
| G | ASA | 70 | " | 30 | 104 | 3,6 | 15,2 |
| H | ASA | 30 | " | 70 | 129 | 16,8 | 36,0 |
| I | HIPS | 10 | 2,2-Bis-(4-hydroxy-3,5-dimethylphenyl)propan | 90 | 190 | 4,2 | 7,2 |
| J | HIPS | 25 | | 75 | 188 | 7,0 | 9,6 |

0058929

## Patentansprüche

1. Verfahren zur Herstellung einer Mischung von

   A)   mindestens einem Polycarbonat
   und
   B)   mindestens einem Styrol enthaltenden Polymerisat, wobei man das gelöste Polycarbonat zunächst mit wenigstens einem Fällungsmittel in Berührung bringt und danach das Lösungsmittel und das Fällungsmittel von dem ausgefallenen Feststoff zunächst weitgehend entfernt und das erhaltene Produkt mit dem Styrol enthaltenden Polymerisat bei Temperaturen oberhalb des Erweichungsbereiches der Komponenten A und B der Mischung in üblicher Weise, ggf. unter Mitverwendung von

   C)   üblichen Zusatzstoffen in wirksamen Mengen, mischt dadurch gekennzeichnet, daß für die Herstellung der Mischung ein Polycarbonat verwendet wird, das noch einen Anteil von mehr als 1 und weniger als 50 Gew.-% an Fällungs- und/oder Lösungsmittel, bezogen auf Polycarbonat, enthält und die Vermischung dieses eine Restfeuchte aufweisenden Polycarbonates mit dem Styrol enthaltenden Polymerisat unter Entfernung flüchtiger Bestandteile durchführt.

2. Verwendung von Mischungen gemäß Patentanspruch 1.

3. Formteile aus Mischungen gemäß Patentanspruch 1.